# EUROPEAN PATENT SPECIFICATION

(11) **EP 3 714 982 B1**
(45) Date of publication and mention of the grant of the patent: **23.07.2025**
(21) Application number: 20153494.8
(22) Date of filing: 24.01.2020
(51) Int. Cl.: B03C 1/033, B03C 1/14

(54) **DRUM TYPE SEPARATION APPARATUS**
TROMMELABSCHEIDEVORRICHTUNG
APPAREIL DE SÉPARATION DE TYPE TAMBOUR

(30) Priority: 29.03.2019 JP 2019065536
(43) Date of publication of application: 30.09.2020
(73) Proprietor: Sumitomo Heavy Industries Finetech, Ltd., Kurashiki-shi, Okayama 713-8501 (JP)
(72) Inventor: NISHIZAWA, Shinya, Okayama,, 713-8501, (JP)
(74) Representative: Louis Pöhlau Lohrentz

(56) References cited:
- WO-A1-2007/138891
- CN-A- 102 773 160
- CN-A- 107 311 275
- CN-B- 101 559 405
- CN-U- 206 139 335
- CN-U- 208 512 792
- JP-A- 2000 061 348
- JP-A- 2009 172 590
- JP-B1- 2 984 834
- US-A- 3 346 113
- US-A- 5 636 748
- US-A1- 2016 318 036

## Description

### BACKGROUND OF THE INVENTION

### Field of the Invention

A certain embodiment of the present invention relates to a drum type separation apparatus.

### Description of Related Art

During metal working in which a machine tool such as a grinder is used, magnetic bodies such as metal pieces are generated from a work material. In the related art, there is a drum type separation apparatus that introduces a coolant liquid including such magnetic bodies and collects the magnetic bodies from the coolant liquid (for example, refer to Japanese Unexamined Patent Application Publication No. 2015-073956). The drum type separation apparatus includes a rotary drum that is disposed such that a part thereof is immersed in a coolant liquid, a magnet that is on an inner side of the rotary drum and pulls the magnetic bodies to the rotary drum, and a scraper that scrapes the magnetic bodies transported by the rotary drum from an outer peripheral surface.

International Patent Publication document WO 2007/138891 A1 discloses a magnetic separator with a rotary drum on which a plurality of magnets are disposed. Chinese Patent Publication No. 107 311 275 discloses a magnetic separator with a rotary drum which includes a portion in which magnetic force is strong, a portion in which magnetic force is gradually weakened, and a portion in which no magnet is installed.

US 5636748 A discloses a magnetic drum separator. US 3346113 A discloses a device for recovering feebly magnetic material in wet separators. JP 2009172590 A discloses a rotary-drum type magnetic separator according to the preamble of the independent claim 1.

### SUMMARY OF THE INVENTION

In the drum type separation apparatus configured as described above, a capacity of the rotary drum transporting the magnetic bodies changes according to disposition and strength of the magnet. It is desirable for the drum type separation apparatus to reduce apparatus costs while maintaining the capacity of transporting the magnetic bodies, leaving room for improvement for this point.

An object of the present invention is to reduce apparatus costs while maintaining a capacity of transporting magnetic bodies in a liquid in a drum type separation apparatus.

The invention is set out in the appended set of claims. According to an aspect of the present invention, there is provided a drum type separation apparatus including inter alia a liquid passage that allows a liquid mixed with a magnetic body to pass therethrough, a rotary drum that is disposed such that a part of the rotary drum is exposed above a liquid surface in the liquid passage, and transports the magnetic body adsorbed on an outer peripheral surface as the rotary drum rotates, and a of magnet that is disposed on an inner side of the rotary drum. A configuration in which a magnetic force on a side lower than the liquid surface from an intersection position where the rotary drum and the liquid surface intersect each other is larger than a magnetic force on a side higher than the liquid surface from the intersection position is adopted.

According to the present invention, apparatus cost reduction can be achieved while a capacity of transporting the magnetic body in the liquid is maintained.

### BRIEF DESCRIPTION OF THE DRAWINGS

Fig. 1 is a view illustrating a drum type separation apparatus according to an embodiment of the present invention.
Fig. 2 is a view illustrating an example of disposition of permanent magnets.
Fig. 3 is a view illustrating details of the disposition of the permanent magnets.
Fig. 4 is a view illustrating a disposition relationship among a rotary drum, a squeezing roller, and magnets.
Fig. 5 is a view illustrating a modification example of permanent magnets in a drum.

### DETAILED DESCRIPTION OF THE INVENTION

Hereinafter, an embodiment of the present invention will be described in detail with reference to the drawings.

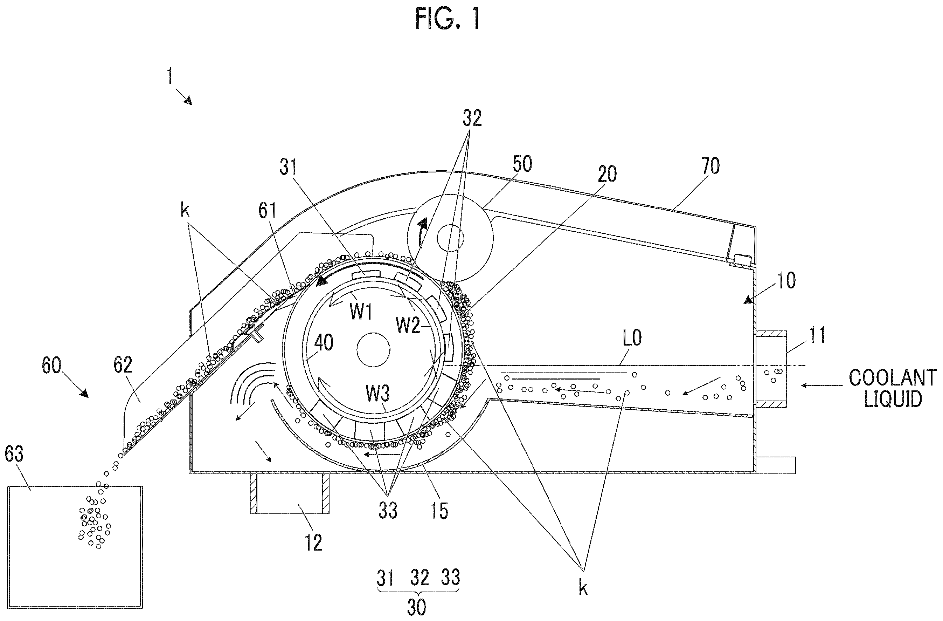

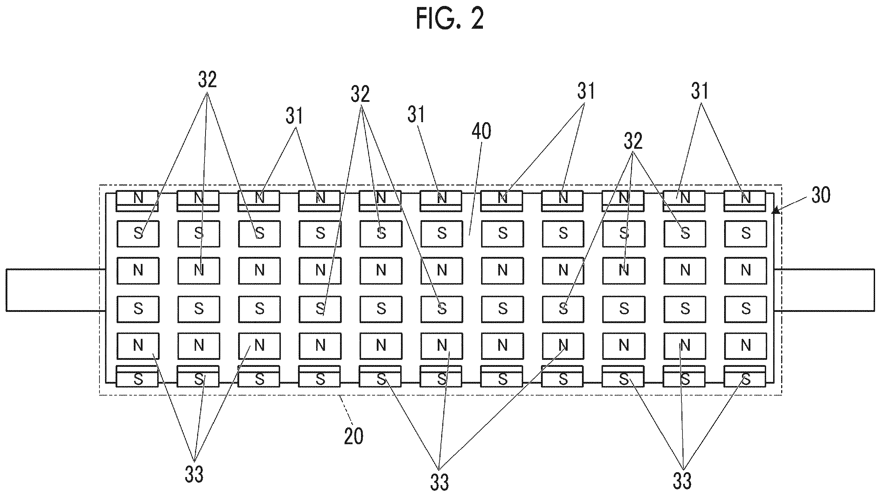

Fig. 1 is a view illustrating a drum type separation apparatus according to the embodiment of the present invention. Fig. 2 is a view illustrating an example of disposition of permanent magnets. In the present specification, when simply referring to a circumferential direction, an axial direction, and a radial direction, the directions mean a circumferential direction, an axial direction, and a radial direction of a rotary drum 20 respectively.

The drum type separation apparatus 1 of the embodiment has a liquid passage 10 that allows a coolant liquid sent from a machine tool to flow therein, the rotary drum 20 that adsorbs magnetic bodies k such as metal pieces onto an outer peripheral surface thereof to transport the magnetic bodies, a magnet 30 disposed along the outer peripheral surface of the rotary drum 20 inside the rotary drum 20, a support body 40 that supports the magnet 30, a squeezing roller 50 that separates out the coolant liquid with the magnetic bodies k interposed between the rotary drum 20 and the squeezing roller, a recovery portion 60 that scrapes and collects the magnetic bodies k transported by the rotary drum 20 from the rotary drum 20, a housing 70 that accommodates the configuration elements of the drum type separation apparatus, a motor (not illustrated) that rotates the rotary drum 20, and an adjusting mechanism (not illustrated) that is capable of adjusting a gap size or a contact pressure between the squeezing roller 50 and the rotary drum 20.

The liquid passage 10 runs in a horizontal direction, has an inlet 11, into which the coolant liquid is introduced, on one side, and has an outlet 12 from which the coolant liquid flows out, on the other side. A side close to the inlet 11 will be called an upstream side, and a side close to the outlet 12 will be called a downstream side. The liquid passage 10 has a flow path frame 15 of which a sectional shape is an arc shape along the outer peripheral surface of the rotary drum 20 (the section is a longitudinal section along a coolant liquid flowing direction). The flow path frame 15 is disposed below the rotary drum 20. A liquid surface L0 is set in the liquid passage 10 such that a passage upper end is not immersed in the coolant liquid.

The rotary drum 20 is disposed in the liquid passage 10 such that a part thereof is exposed above the liquid surface L0. A rotation center axis of the rotary drum 20 faces the horizontal direction. The rotary drum 20 is rotated by the motor. The rotation direction is a direction where an upstream outer peripheral surface rotates upward and a downstream outer peripheral surface rotates downward.

At a position higher than the liquid surface L0, the squeezing roller 50 is in contact with or approaches the rotary drum 20, and is rotatably disposed. A rotation center axis of the squeezing roller 50 is parallel to the rotation center axis of the rotary drum 20.

The recovery portion 60 includes a scraper 61 that scrapes the magnetic bodies k from the rotary drum 20 at a position higher than the liquid surface L0 and a chute 62 that sends the scraped magnetic bodies k to a collection box 63. A tip part of the scraper 61 is disposed to be in contact with or to approach the outer peripheral surface of the rotary drum 20 above and on a downstream side of the rotation center axis of the rotary drum 20.

The support body 40 has a cylindrical shape along the outer peripheral surface of the rotary drum 20, and is fixed to an inner side of the rotary drum 20.

The magnet 30 includes three groups of permanent magnets 31, 32, and 33 having different magnetic forces from each other. As illustrated in Figs. 1 and 2, the plurality of magnets 30 are arrayed, for example, at intervals in the circumferential direction and the axial direction, and are disposed toward magnetic poles in the radial direction. The magnetic poles are arranged such that the N-pole and the S-pole alternate in turn along the circumferential direction. The three groups of the permanent magnets 31, 32, and 33 are magnets made of the same material, and have almost the same area seen in the radial direction. As the three groups of the permanent magnets 31, 32, and 33 have thicknesses different from each other, magnetic forces are different from each other. That is, out of the magnets 30, the permanent magnets 31 which have the smallest magnetic force have the smallest thickness. The permanent magnets 32 which have the second smallest magnetic force have the secondsmallest thickness. The permanent magnets 33 which have the largest magnetic force have the largest thickness.

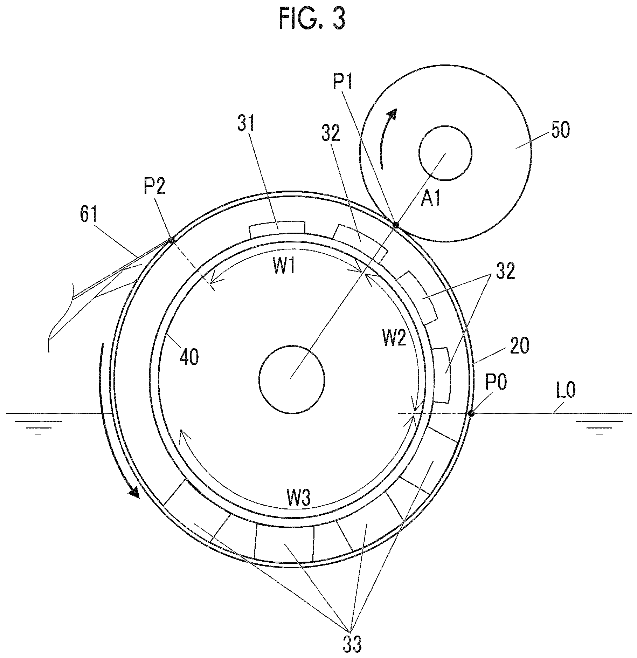

Fig. 3 is a view illustrating details of the disposition of the permanent magnets.

Herein, the disposition of the three groups of the permanent magnets 31, 32, and 33 will be described with the use of angle ranges in the rotation direction of the rotary drum 20 when seen in the axial direction. The permanent magnets 31 which have the smallest magnetic force are disposed in an angle range W1 from a position P1 where the squeezing roller 50 faces the rotary drum 20 to a tip position P2 of the scraper 61. The permanent magnets 32 which have the second largest magnetic force are disposed in an angle range W2 from an intersection position P0 between the rotary drum 20 and the liquid surface L0 on an upstream side to the position P1 facing the squeezing roller 50. It is sufficient that some of the permanent magnets 32 overlap the angle range W2 on a squeezing roller 50 side. The permanent magnets 33 which have the largest magnetic force are disposed in an angle range W3 from the intersection position P0 between the rotary drum 20 and the liquid surface L0 on the upstream side to a transportation section lower than the liquid surface L0. The permanent magnets 31, 32, and 33 have different distances up to the outer peripheral surface of the rotary drum 20 as the permanent magnets have different thicknesses. The permanent magnets 31 have the largest distance, and the permanent magnets 33 have the smallest distance. The angle range W2 corresponds to an example of a first angle range according to the present invention, and the angle range W3 corresponds to an example of a second angle range according to the present invention.

### <Operation>

Next, operation of the drum type separation apparatus 1 will be described. In a state where the rotary drum 20 is rotated, the coolant liquid flows in the liquid passage 10 in the drum type separation apparatus 1. When the coolant liquid passes between the rotary drum 20 and the flow path frame 15, the magnetic bodies k included in the coolant liquid are pulled to the magnet 30 (permanent magnets 33) and are adsorbed onto the outer peripheral surface of the rotary drum 20. Since the permanent magnets 33 disposed in the angle range W3 generate a strongmagnetic force, the magnetic bodies k can be adsorbed onto the rotary drum 20 against the flow of the coolant liquid.

The adsorbed magnetic bodies k are transported by the rotation of the rotary drum 20, and are moved above the liquid surface L0. Due to a difference between the permanent magnets 33 in the angle range W3 (below the liquid surface L0) and the permanent magnets 32 in the angle range W2 (above the liquid surface L0), a magnetic force of an upper section is weaker than a magnetic force of a lower section with the liquid surface L0 as a boundary. It is necessary to pull the magnetic bodies k against a resistance force of the coolant liquid below the liquid surface L0, and a large magnetic force that makes the pulling possible is set. A magnetic force against the resistance force of the coolant liquid is not necessary above the liquid surface L0, and a magnetic force that allows transportation of the adsorbed magnetic bodies k to a place of the squeezing roller 50 is sufficient. For this reason, by making a magnetic force above the liquid surface L0 smaller than a magnetic force below the liquid surface L0, a capacity of transporting the magnetic bodies k can be maintained while costs can be reduced by the amount that the magnetic force is weakened.

After then, as the magnetic bodies k that are adsorbed on the rotary drum 20 and have exceeded the liquid surface L0 reach between the rotary drum 20 and the squeezing roller 50, a large amount of coolant liquid attached to the magnetic bodies k is separated out. With the magnetic bodies k adsorbed onto the rotarydrum20, the magnetic bodies are transported from a position of the squeezing roller 50 to a position of the scraper 61. Then, the magnetic bodies k are scraped and collected from the rotary drum 20 by the scraper 61.

While moving from the squeezing roller 50 to the position of the scraper 61, the magnetic bodies k move from the angle range W2 where the permanent magnets 32 having a medium magnetic force are disposed to the angle range W1 where the permanent magnets 31 having a small magnetic force are disposed. The magnetic bodies k move from the angle range W1 where the permanent magnets 31 are disposed to a side of the scraper 61 where a permanent magnet is not disposed. In this manner, when moving from a position where a magnetic force is strong to a position where a magnetic force is weak, the magnetic bodies k are adsorbed by the strong magnetic force, and the magnetic bodies k accumulate on a side where the magnetic force is strong in some cases without the magnetic bodies k going to a side where the magnetic force is weak in a case where a difference between the magnetic forces is large.

However, in the embodiment, the permanent magnets 32 disposed in the angle range W2 above the liquid surface L0 are set to have a magnetic force smaller than the permanent magnets 33 in the angle range W3, which are necessary to strongly pull the magnetic bodies k in the coolant liquid. Therefore, a magnetic force difference between the permanent magnets 32 in a place exceeding the squeezing roller 50 and the permanent magnets 31 at a position close to the scraper 61 can be made small. For this reason, in an angle range where the squeezing roller 50 is exceeded and scraping is performed by the scraper 61, a magnetic force difference does not become abrupt. Accordingly, stagnation of the magnetic bodies k caused by the accumulation of the magnetic bodies k can be suppressed. As a result, the magnetic bodies k are efficiently collected.

### (Modification Example)

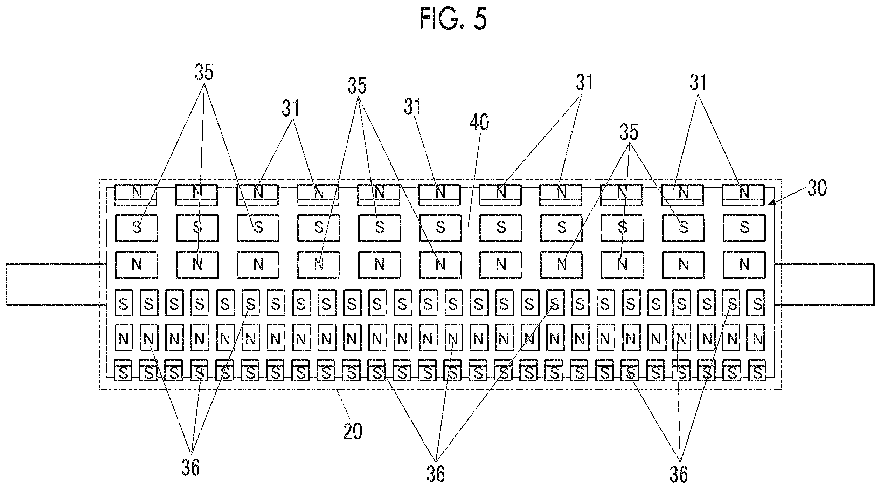

Fig. 5 is a view illustrating a modification example of permanent magnets in the drum, said modification example not being covered by the claims.

In the embodiment described above, in order to make the magnitude of a magnetic force exerted from the magnet 30 to the outer peripheral surface of the rotary drum 20 different for each of the angle ranges W1 to W3, thicknesses of the permanent magnets 31, 32, and 33 disposed in the angle ranges W1 to W3 are made different from each other. However, in examples not covered by the claims means for making the magnitudes of magnetic forces different from each other are not limited thereto. For example, by making materials for the permanent magnets (for example, ferrite and neodymium) different from each other, the magnitudes of the magnetic forces may be made different from each other. In addition, by making the magnetic forces of the respective permanent magnets the same and making distances between the permanent magnets and the outer peripheral surface of the rotary drum 20 different from each other, the magnitudes of the magnetic forces may be made different from each other.

The permanent magnet has a characteristic that the magnetic flux density of a center portion decreases when the permanent magnet has a large surface area. Therefore, as illustrated with permanent magnets 35 and 36 of Fig. 5, by making an area seen from the radial direction, a disposed number per unit area, and the thickness different, the magnitude of a magnetic force exerted to the outer peripheral surface of the rotary drum 20 may be made different for each angle range. In this case, the permanent magnets 36, each of which has a small area seen from the radial direction, which have a large disposed number per unit area, and each of which has a large thickness, may be disposed in the angle range W3 (Fig. 3), and the permanent magnets 35, each of which has a large area seen from the radial direction, which have a small disposed number per unit area, and each of which has a small thickness, may be disposed in the angle range W2. The permanent magnets 36, each of which has a small area seen from the radial direction, which have a large disposed number per unit area, and each of which has a large thickness, can exert a large magnetic force to the outer peripheral surface of the rotary drum 20. In addition, out of the means for making the magnitudes of magnetic forces different from each other, two or more means may be used in combination.

As described above, in the drum type separation apparatus 1 of the embodiment, a magnetic force exerted from the magnet 30 to the outer peripheral surface of the rotary drum 20 is larger below the intersection position P0 than above the intersection position P0 between the rotary drum and the liquid surface. That is, a magnetic force above the liquid surface L0 which does not need a magnetic force against the resistance force of the coolant liquid is set to be small while a large magnetic force below the liquid surface L0 which is necessary to pull the magnetic bodies k against the resistance force of the coolant liquid is maintained. Therefore, costs of the drum type separation apparatus 1 (costs of apparatus, including component costs) can be reduced by the amount that a magnetic force above the liquid surface L0 is weakened while a capacity of transporting the magnetic bodies k is maintained.

In the drum type separation apparatus 1 of the embodiment, an angle range where a magnetic force smaller than the magnetic force below the liquid surface L0 is exerted is the angle range W2 from the intersection position P0 between the rotary drum 20 and the liquid surface L0 to the position P1 facing the squeezing roller 50. As such a magnetic force in the angle range W2 is made smaller than a magnetic force in the angle range W3 below the liquid surface L0, the detachment of the magnetic bodies k from the outer peripheral surface of the rotary drum 20 can be suppressed from around a time when exceeding the liquid surface L0 to a time when the coolant liquid is separated out by the squeezing roller 50.

In the drum type separation apparatus 1 of the embodiment, a thickness of each of the permanent magnets 32 disposed in the angle range W2 is smaller than a thickness of each of the permanent magnets 33 disposed in the angle range W3. Accordingly, the difference in magnetic force described above can be generated, and a magnetic force exerted to the outer peripheral surface of the rotary drum 20 can be easily adjusted to a design value by using the difference in thickness.

In addition, as described in the modification example of the embodiment, even when materials for the permanent magnets disposed in the angle range W2 and the permanent magnets disposed in the angle range W3 are made different from each other, the difference in magnetic force described above can be generated. In addition, as described in the modification example of the embodiment, the difference in magnetic force described above can be generated by making the permanent magnets 35 and 36 different from each other in terms of an area seen from the radial direction, a disposed number per unit area, and a thickness.

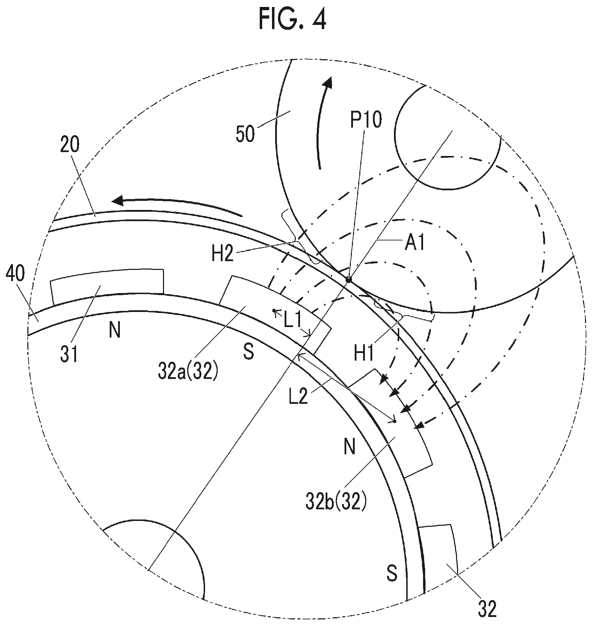

Fig. 4 is a view illustrating a disposition relationship among the rotary drum, the squeezing roller, and the magnets. In Fig. 4, the magnetic flux of each of magnets 32a and 32b is shown with a one-dot chain line.

In a longitudinal section perpendicular to the axial direction, a pair of magnets 32a and 32b, which are disposed close to the squeezing roller 50 and are adjacent to each other, are disposed to be shifted from a line segment A1 that connects the rotation center axis of the rotary drum 20 and the rotation center axis of the squeezing roller 50 to each other. One magnet 32a is disposed to be shifted in the rotation direction of the rotary drum 20 from the line segment A1, and the other magnet 32b is disposed to be shifted in a reverse rotation direction of the rotary drum 20 from the line segment A1. The line segment A1 is shifted in the rotation direction from a midpoint of a line segment that connects a center point of the magnet 32a and a center point of the magnet 32b to each other. In other words, a distance L1 between a center of the magnet 32a and the line segment A1 is smaller than a distance L2 between the center of the magnet 32b and the line segment A1.

In such disposition, a direction of magnetic flux lies sideways in a range H1, which is closer to a reverse rotation side of the squeezing roller 50 than a closest point P10 between the squeezing roller 50 and the rotary drum 20 is. That is, the direction of the magnetic flux is a direction in which a circumferential component of the squeezing roller 50 is larger than a radial component of the squeezing roller 50. The direction of the magnetic flux stands in a range H2, which is closer to a rotation side of the squeezing roller 50 than the closest point P10 is. That is, the direction of the magnetic flux is a direction in which a radial component of the squeezing roller 50 is larger than a circumferential component of the squeezing roller 50. Since the magnetic bodies k each have a short needle shape, there is a possibility that the magnetic bodies k are stuck in an outer peripheral surface of the squeezing roller 50 and the magnetic bodies k are attached to the squeezing roller 50. However, with such a direction of the magnetic flux, the magnetic bodies k are unlikely to be stuck in the squeezing roller 50 in a direction where the magnetic bodies k lie when the magnetic bodies k go in between the squeezing roller 50 and the rotary drum 20. When the magnetic bodies k are sent out from between the squeezing roller 50 and the rotary drum 20, the magnetic bodies k are strongly pulled in a vertical direction. Therefore, the magnetic bodies k stuck in the squeezing roller 50 are easily pulled out from the squeezing roller 50. Therefore, due to such reaction, a phenomenon in which the magnetic bodies k are stuck and attached to the squeezing roller 50 can be suppressed.

The embodiment of the present invention has been described hereinbefore. However, the present invention is not limited to the embodiment. For example, the permanent magnets are given as examples of a magnet in the embodiment. However, in an example not covered by the claims electromagnets may be applied as the magnet. In this case, by making a current, the number of winding of a winding wire, and a size or disposition of a yoke different, the magnitude of a magnetic force exerted to the outer peripheral surface of the rotary drum can be changed. Although a configuration where the plurality of permanent magnets are arrayed with gaps is described as an example in the embodiment, the magnet may be configured by one continuous permanent magnet. A configuration where the plurality of permanent magnets are arrayed without gaps may be adopted. Although a configuration where the liquid surface L0 is set in advance is described as an example in the embodiment, a configuration where the liquid surface L0 fluctuates may be adopted. In this case, a mechanism that changes disposition of the magnet in synchronization with the fluctuations of the liquid surface L0 maybe added. In addition, since the present apparatus is an apparatus that separates between a solid and a liquid, a liquid other than the coolant liquid, such as fresh water, may be used. In addition, details described in the embodiment can be changed as appropriate provided that they fall within the scope of the invention, which is defined by the appended claims.

### Brief Description of the Reference Symbols

1 drum type separation apparatus
10 liquid passage
11 inlet
12 outlet
20 rotary drum
30 magnet
31 to 33, 35, 36 permanent magnet
32a magnet (first magnet)
32b magnet (second magnet)
40 support body
50 squeezing roller
60 recovery portion
61 scraper
62 chute
70 housing
k magnetic body
L0 liquid surface
P0 intersection position between rotary drum and liquid surface on upstream side
W2 angle range (first angle range)
W3 angle range (second angle range)

## Claims

1. A drum type separation apparatus (1) comprising:
a liquid passage (10) that allows a liquid mixed with a magnetic body (k) to pass therethrough, wherein a liquid surface (L0) is set in the liquid passage (10) when the drum separation apparatus (1) is in use;
a rotary drum (20) that is disposed such that a part of the rotary drum (20) is exposed above the liquid surface (L0) in the liquid passage, the rotary drum (20) being configured to transport the magnetic body (k) adsorbed on an outer peripheral surface thereof as the rotary drum (20) rotates; and
a magnet (30) that is disposed on an inner side of the rotary drum (20),
a squeezing roller (50) at a position higher than the liquid surface (L0), the squeezing roller (50) being configured to separate out the liquid attached to the magnetic body (k) interposed between the outer peripheral surface of the rotary drum (20) and the squeezing roller (50), and
a scraper (61) at a position higher than the liquid surface (L0), the scraper (61) being configured to scrape the magnetic body (k) from the rotary drum (20),
wherein a magnetic force on a side lower than the liquid surface (L0) from an intersection position (P0) where the rotary drum (20) and the liquid surface (L0) intersect each other is larger than a magnetic force on a side higher than the liquid surface (L0) from the intersection position (P0),
the magnet (30) comprises three groups of permanent magnets (31, 32, 33) that have different magnetic forces from each other, are made of the same material, have almost the same area seen in a radial direction, and have thicknesses different from each other,
the permanent magnets (31) which have the smallest thickness and the smallest magnetic force are disposed in an angle range (W1) from a position (P1) where the squeezing roller (50) faces the rotary drum (20) to a tip position (P2) of the scraper (61),
**characterized in that**
the permanent magnets (32) which have the second largest thickness and the second largest magnetic force are disposed in an angle range (W2) from an intersection position (PO) between the rotary drum (20) and the liquid surface (LO) on an upstream side to the position (P1) facing the squeezing roller (50),
the permanent magnets (33) which have the largest thickness and the largest magnetic force are disposed lower than the liquid surface (LO);
the group of magnets (32) having the second largest thickness and the second largest magnetic force includes a first magnet (32a) and a second magnet (32b), which are disposed to be shifted respectively in a rotation direction and a reverse rotation direction of the rotary drum (20) with respect to a line segment (A1) that connects a rotation center of the rotary drum (20) and a rotation center of the squeezing roller (50) to each other and are adjacent to each other, in a longitudinal section, and
the line segment (A1) is shifted in the rotation direction from a midpoint of a line segment (A1) that connects a center of the first magnet (32a) and a center of the second magnet (32b) to each other.

## Patentansprüche

1. Trommeltyp-Trennvorrichtung (1), umfassend:
einen Flüssigkeitsdurchgang (10), durch den eine mit einem magnetischen Körper (k) vermischte Flüssigkeit hindurchtreten kann, wobei eine Flüssigkeitsoberfläche (L0) in dem Flüssigkeitsdurchgang (10) eingestellt ist, wenn die Trommeltrennvorrichtung (1) in Gebrauch ist;
eine Drehtrommel (20), die so angeordnet ist, dass ein Teil der Drehtrommel (20) oberhalb der Flüssigkeitsoberfläche (L0) in dem Flüssigkeitsdurchgang freiliegt, wobei die Drehtrommel (20) so konfiguriert ist, dass sie den magnetischen Körper (k), der an einer Außenumfangsfläche adsorbiert ist, transportiert, wenn sich die Drehtrommel (20) dreht; und
einen Magneten (30), der an einer Innenseite der Drehtrommel (20) angeordnet ist,
eine Quetschwalze (50) an einer Position, die höher als die Flüssigkeitsoberfläche (L0) ist, wobei die Quetschwalze (50) so konfiguriert ist, dass sie die Flüssigkeit, die an dem Magnetkörper (k) haftet, der zwischen der äußeren Umfangsfläche der Drehtrommel (20) und der Quetschwalze (50) angeordnet ist, abtrennt, und
einen Abstreifer (61) an einer Position, die höher als die Flüssigkeitsoberfläche (L0) ist, wobei der Abstreifer (61) so konfiguriert ist, dass er den Magnetkörper (k) von der Drehtrommel (20) abstreift,
wobei eine Magnetkraft auf einer Seite, die niedriger als die Flüssigkeitsoberfläche (L0) ist, von einer Schnittpunktposition (P0), an der die Drehtrommel (20) und die Flüssigkeitsoberfläche (L0) einander schneiden, größer ist als eine Magnetkraft auf einer Seite, die höher als die Flüssigkeitsoberfläche (L0) ist, von der Schnittpunktposition (P0),
der Magnet (30) drei Gruppen von Permanentmagneten (31, 32, 33) umfasst, die voneinander verschiedene Magnetkräfte haben, aus demselben Material hergestellt sind, in radialer Richtung gesehen fast dieselbe Fläche haben und voneinander unterschiedliche Dicken aufweisen,
die Permanentmagnete (31), die die geringste Dicke und die geringste Magnetkraft aufweisen, in einem Winkelbereich (W1) von einer Position (P1), in der die Quetschwalze (50) der Drehtrommel (20) zugewandt ist, zu einer Spitzenposition (P2) des Abstreifers (61) angeordnet sind,
**dadurch gekennzeichnet, dass**
die Permanentmagnete (32), die die zweitgrößte Dicke und die zweitgrößte Magnetkraft aufweisen, in einem Winkelbereich (W2) von einer Schnittposition (PO) zwischen der Drehtrommel (20) und der Flüssigkeitsoberfläche (LO) auf einer stromaufwärts gelegenen Seite zu der der Quetschwalze (50) zugewandten Position (P1) angeordnet sind,
die Permanentmagnete (33), die die größte Dicke und die größte Magnetkraft haben, niedriger als die Flüssigkeitsoberfläche (LO) angeordnet sind;
die Gruppe von Magneten (32) mit der zweitgrößten Dicke und der zweitgrößten Magnetkraft einen ersten Magneten (32a) und einen zweiten Magneten (32b) umfasst, die so angeordnet sind, dass sie in einer Drehrichtung bzw. einer umgekehrten Drehrichtung der Drehtrommel (20) in Bezug auf ein Liniensegment (A1), das ein Drehzentrum der Drehtrommel (20) und ein Drehzentrum der Quetschwalze (50) miteinander verbindet und aneinander angrenzt, in einem Längsschnitt verschoben werden, und
das Liniensegment (A1) in der Drehrichtung von einem Mittelpunkt eines Liniensegments (A1), das einen Mittelpunkt des ersten Magneten (32a) und einen Mittelpunkt des zweiten Magneten (32b) miteinander verbindet, verschoben ist.

## Revendications

1. Un appareil de séparation de type tambour (1) comprenant :
un passage de liquide (10) qui permet à un liquide mélangé à un corps magnétique (k) de passer à travers celui-ci, dans lequel une surface de liquide (LO) est définie dans le passage de liquide (10) lorsque l'appareil de séparation de type tambour (1) est en cours d'utilisation ;
un tambour rotatif (20) qui est disposé de telle sorte qu'une partie du tambour rotatif (20) est exposée au-dessus de la surface de liquide (LO) dans le passage de liquide, le tambour rotatif (20) étant configuré pour transporter le corps magnétique (k) adsorbé sur une surface périphérique externe de celui-ci lorsque le tambour rotatif (20) tourne ; et
un aimant (30) qui est disposé sur un côté interne du tambour rotatif (20),
un rouleau de compression (50) dans une position plus élevée que la surface de liquide (LO), le rouleau de compression (50) étant configuré pour séparer le liquide fixé au corps magnétique (k) interposé entre la surface périphérique externe du tambour rotatif (20) et le rouleau de compression (50), et
un racloir (61) dans une position plus élevée que la surface de liquide (LO), le racloir (61) étant configuré pour racler le corps magnétique (k) du tambour rotatif (20),
dans lequel une force magnétique sur un côté plus bas que la surface de liquide (LO) par rapport à une position d'intersection (PO) où le tambour rotatif (20) et la surface de liquide (LO) se croisent est supérieure à une force magnétique sur un côté plus élevé que la surface de liquide (LO) par rapport à la position d'intersection (PO),
l'aimant (30) comprend trois groupes d'aimants permanents (31, 32, 33) qui ont des forces magnétiques différentes les unes des autres, sont constitués du même matériau, ont presque la même surface vus dans une direction radiale, et ont des épaisseurs différentes les unes des autres,
les aimants permanents (31) qui ont l'épaisseur la plus petite et la force magnétique la plus petite sont disposés dans une plage angulaire (W1) d'une position (P1) où le rouleau de compression (50) fait face au tambour rotatif (20) à une position de pointe (P2) du racloir (61),
**caractérisé en ce que**
les aimants permanents (32) qui ont la deuxième épaisseur la plus grande et la deuxième force magnétique la plus grande sont disposés dans une plage angulaire (W2) d'une position d'intersection (PO) entre le tambour rotatif (20) et la surface de liquide (LO) sur un côté en amont de la position (P1) faisant face au rouleau de compression (50),
les aimants permanents (33) qui ont l'épaisseur la plus grande et la force magnétique la plus grande sont disposés plus bas que la surface de liquide (LO) ;
le groupe d'aimants (32) ayant la deuxième épaisseur la plus grande et la deuxième force magnétique la plus grande inclut un premier aimant (32a) et un deuxième aimant (32b), qui sont disposés pour être décalés respectivement dans une direction de rotation et une direction de rotation inverse du tambour rotatif (20) par rapport à un segment de ligne (A1) qui relie un centre de rotation du tambour rotatif (20) et un centre de rotation du rouleau de compression (50) l'un à l'autre et sont adjacents l'un à l'autre, dans une section longitudinale, et
le segment de ligne (A1) est décalé dans la direction de rotation par rapport à un point médian d'un segment de ligne (A1) qui relie un centre du premier aimant (32a) et un centre du deuxième aimant (32b) l'un à l'autre.
